(19) **Europäisches Patentamt**

**European Patent Office**

**Office européen des brevets**

(11) Veröffentlichungsnummer: **0 153 428**

**B1**

# EUROPÄISCHE PATENTSCHRIFT

(45) Veröffentlichungstag der Patentschrift:
18.05.88

(21) Anmeldenummer: 84102020.9

(22) Anmeldetag: 27.02.84

(51) Int. Cl.⁴: **F 16 K 17/19,** F 15 B 1/06,
B 60 T 11/26, F 16 N 21/06

(54) Lüftungskappe für einen Hydrauliköltank.

(43) Veröffentlichungstag der Anmeldung:
04.09.85 Patentblatt 85/36

(45) Bekanntmachung des Hinweises auf die Patenterteilung:
18.05.88 Patentblatt 88/20

(84) Benannte Vertragsstaaten:
DE FR GB IT SE

(56) Entgegenhaltungen:
DE-A-3 206 965
DE-A-3 212 307
US-A-2 501 621

(73) Patentinhaber: Vickers Systems GmbH,
Frölingstrasse 41, D-6380 Bad Homburg (DE)

(72) Erfinder: Stämmler, Erwin, Steinstrasse 17, D-6242
Kronberg (DE)
Erfinder: Teubler, Heinz, Ringstrasse 3, D-6382
Friedrichsdorf (DE)

(74) Vertreter: Blumbach Weser Bergen Kramer
Zwirner Hoffmann Patentanwälte,
Sonnenbergerstrasse 43, D-6200 Wiesbaden 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Lüftungskappe für einen Hydrauliköltank mit folgenden Merkmalen:

der Hydrauliköltank weist einen inneren Lüftungskanal und ein nach außen vorstehendes Bajonett- oder Schraubteil auf, entlang welchem sich der innere Lüftungskanal erstreckt; ein Befestigungsteil greift am Bajonett- oder Schraubteil an und hält die Lüftungskappe am Hydrauliköltank;

die Lüftungskappe umfaßt eine innere Kammer, die mit dem inneren Lüftungskanal verbunden ist und von der wenigstens ein äußerer Lüftungskanal ins Freie führt.

Derartige Lüftungskappen (DE-A-3 141 728, 3 212 307) dienen zur Be- und Entlüftung des Hydrauliköltanks von Lenkhilfpumpen und haben deshalb die Aufgabe, Spritzwasser nicht ins Innere des Hydrauliköltanks gelangen zu lassen. Die Lüftungskappe ist einstückig aus Gummi gefertigt und besitzt ein kranzartiges, hutartiges, oberes Ende, das zur Verdeckung der Lüftungskanäle umgestülpt werden kann. Die Mutter ist in der Lüftungskappe einvulkanisiert. Dies bedingt einen erhöhten Kostenaufwand. Das umgestülpte Teil bildet Dichtlippen, mit denen einerseits Wasser vom Eindringen in den Lüftungskanal abgehalten und andererseits das Passieren von Luft in geringen Mengen durch den abgedichteten Spalt zugelassen werden soll. Durchgeführte Versuche haben jedoch ergeben, daß bei der Einwirkung eines Heißwasserstrahls, wie dieser für die Motorwäsche verwendet wird, in den Hydrauliköltank Wasser eindringen kann.

Der Erfindung liegt deshalb die Aufgabe zugrunde, eine Lüftungskappe der eingangs angegebenen Art so zu gestalten, daß bei Einwirkung von Hochdruck-Heißwasser einer Motorwaschanlage praktisch kein Wasser bis in den Hydrauliköltank gelangt.

Die gestellte Aufgabe wird dadurch gelöst, daß die Lüftungskappe aus zwei aufeinandergesteckten Teilen besteht, zwischen denen ein Labyrinthkanal mit in Umfangsrichtung versetzt angeordneten Engstellen freigelassen ist.

Bei dieser Lösung ist keine Dichtlippe vorgesehen, die unter der Einwirkung eines Hochdruck-Heißwasserstrahls soweit nachgeben kann, daß unerwünscht große Wassermengen ins Innere des Hydrauliköltanks gelangen können, vielmehr kann Wasser oder Dampf des Druck-Heißwasserstrahls teilweise in die Lüftungskappe eindringen, muß jedoch den steigend angeordneten Labyrinthkanal durchwandern, bis es in die innere Kammer der Lüftungsklappe gelangt. Der dabei auftretende starke Druckabfall führt dazu, daß nur geringe Mengen (ein Drittel der mit der bekannten Lüftungskappe zu beobachtenden Werte) eindringen.

Weitere Einzelheiten der Erfindung sind in den Ansprüchen enthalten und werden anhand der Zeichnung in der nachfolgenden Beschreibung erläutert. Dabei zeigt:

Fig. 1 einen axialen Längsschnitt durch die Lüftungskappe,

Fig. 2 einen Schnitt entlang der Linie II-II in Fig. 1,

Fig. 3 einen Schnitt entlang der Linie III-III in Fig. 1,

Fig. 4 einen weiteren Schnitt entlang der Linie IV-IV in Fig. 1,

Fig. 5 eine Ansicht der Lüftungskappe von oben und

Fig. 6 eine zweite Ausführungsform der Lüftungskappe im axialen Längsschnitt.

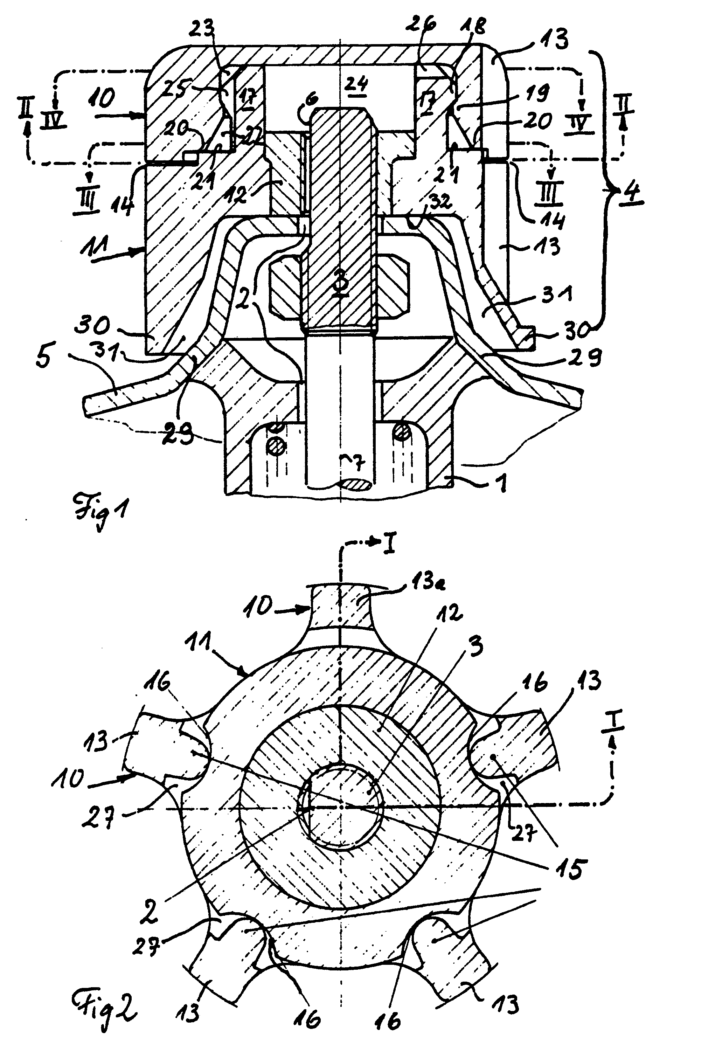

In Fig. 1 ist das obere Ende eines Hydrauliköltanks 1 dargestellt, an welchem sich ein Gewindebolzen 3 befindet, der zur Befestigung einer Lüftungskappe 4 und eines Behälterdeckels 5 dient. Der Spiegel des Hydrauliköls im Tank 1 ist nicht konstant, weswegen eine Be- und Entlüftung vorgesehen ist, die einen inneren Lüftungskanal 2 umfaßt, der sich entlang des Gewindebolzens 3 erstreckt. Im vorliegenden Fall sind die Durchbrüche am oberen Ende des Hydrauliköltanks 1 und des Behälterdeckels 5 weiter als der Durchmesser des Gewindebolzens 3, der im übrigen eine Abflachung 6 enthält. Der innere Lüftungskanal 2 könnte auch als Bohrung parallel zur Längsachse 7 des Hydrauliköltanks 1 realisiert sein.

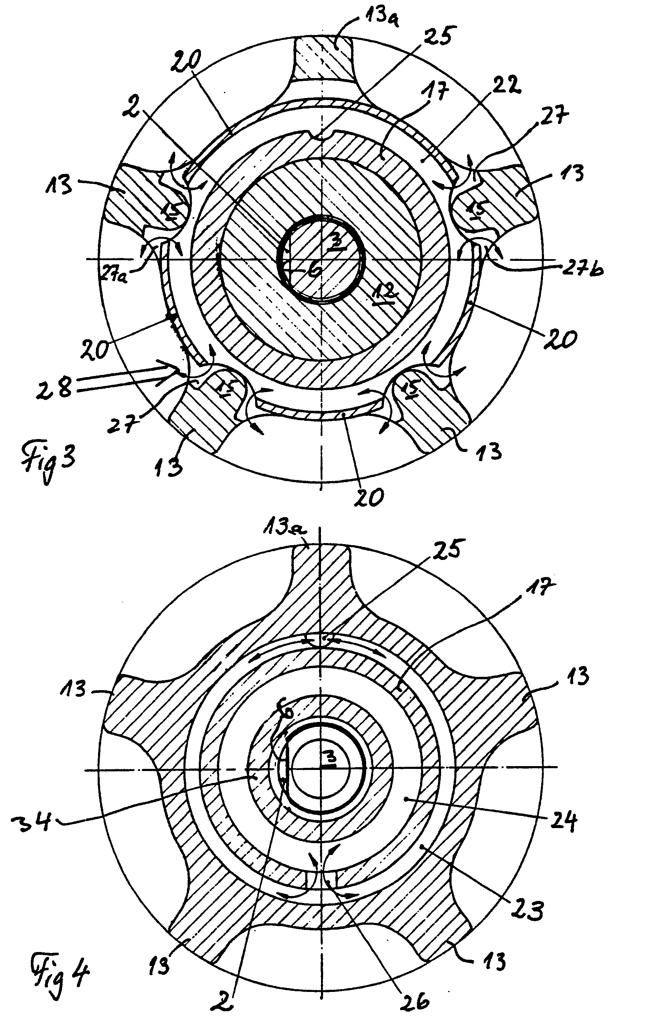

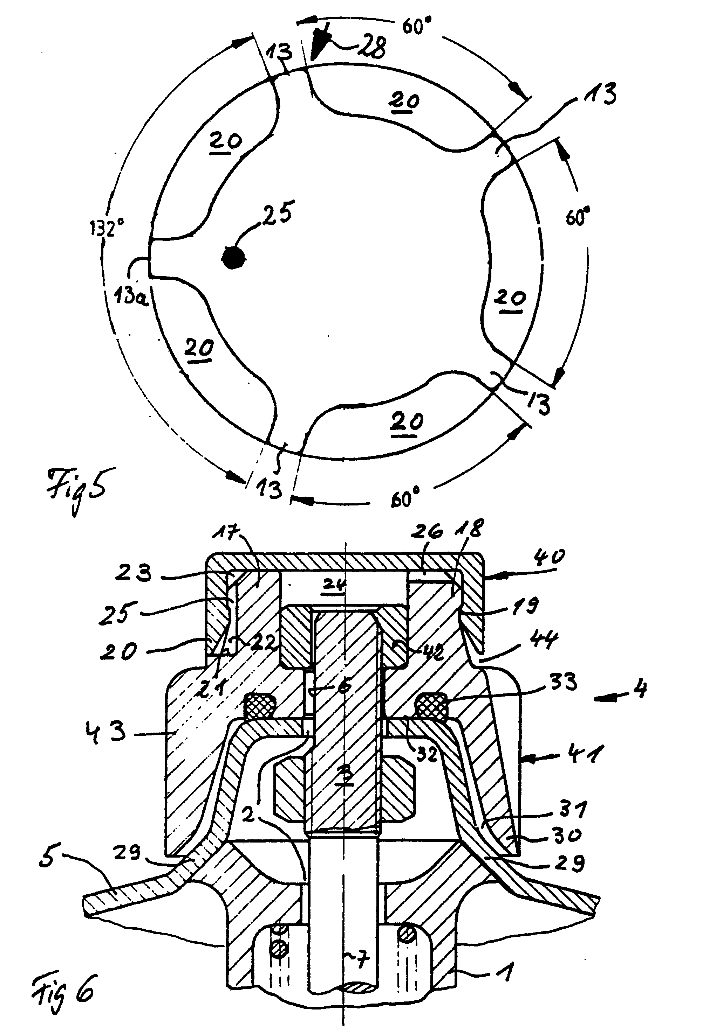

Die Lüftungskappe 4 besteht im wesentlichen aus zwei Teilen, nämlich einem Oberteil 10 und einem Unterteil 11, die aus einem hitzebeständigen Kunststoff bestehen. Das Unterteil 11 kann integral mit einer Befestigungsmutter 12 aus Metall verbunden sein. Es versteht sich, daß anstelle von Gewinde auch eine Bajonettverbindung zwischen den Teilen 3 und 12 bewerkstelligt werden könnte. Wie am besten aus Fig. 5 ersichtlich, sind am Außenumfang der Lüftungskappe 4 fünf axial ausgerichtete Rippen 13 vorgesehen, so daß die Lüftungskappe 4 bequem von Hand an- und abgeschraubt werden kann. Die Rippen 13 erstrecken sich sowohl am Oberteil wie am Unterteil 11 (Fig. 1) und sind jeweils durch eine Lücke oder einen Schlitz 14 unterbrochen. Im Bereich dieser Lücke 14 besitzen einige der Rippen 13 des Oberteils 10 Nocken 15, die in halbkreisförmigen Aussparungen 16 des Unterteils 11 eingreifen und so eine Drehsicherung bilden. Bei der in Fig. 2 oben dargestellten Rippe 13a fehlt der Nocken 15 und die Aussparung 16, so daß das Oberteil 10 nur in einer bestimmten Winkellage auf das Unterteil 11 geklipst werden kann, wie nachfolgend beschrieben.

Am oberen Ende weist das Unterteil 11 eine Ringwandung 17 auf, die einen umlaufenden Rastvorsprung 18 besitzt. Das Oberteil 10 hat einen entsprechenden umlaufenden Rastwulst 19 an seiner Innenseite. Rastvorsprung 18 und Rastwulst 19 besitzen jeweils eine Schrägfläche, die so angeordnet sind, daß im montierten Zustand der Lüftungskappe 4 die Unterseite des Oberteils 10 entlang von Ringsegmenten 20 (Fig.

1 und 3) auf einer Auflagefläche 21 des Unterteils dichtend aufgepreßt werden.

Zwischen der Ringwandung 17 und der äußeren Wandung des Oberteils 10 sind ein oberer Ringkanal 23 und ein unterer Ringkanal 22 freigelassen. Zwischen der Ringwandung 17, der oberen Wandung des Oberteils 10 und der Oberseite der Befestigungsmutter 12 ist eine innere Kammer 24 angeordnet. Die Ringkanäle 22 und 23 sind über eine achsparallele, schlitzförmige Nut 25 im Rastvorsprung 18 miteinander verbunden, wobei die Nut 25 insbesondere an der Rastwulst 19 eine Engstelle bildet. Eine weitere schlitzförmige Nut 26 verbindet den oberen Ringkanal 23 mit der inneren Kammer 24. Dabei wird ebenfalls eine Engstelle gebildet, die gegenüber der ersten Engstelle 25 um 180° versetzt angeordnet ist, wie am besten aus Fig. 4 ersichtlich.

Fig. 3 stellt einen Schnitt durch die Lüftungskappe 4 knapp oberhalb der Auflagefläche 21 dar. Wie ersichtlich, sind acht Lücken zwischen den unteren Enden der Rippen 13 und den Ringsegmenten 20 vorhanden. Diese Lücken können als flache Ausnehmungen 27 ausgebildet sein und bilden Lüftungsschlitze, die den Austausch von Luft zwischen außen und dem unteren Ringkanal 22 ermöglichen, was durch entsprechende Pfeile angedeutet ist. Spritzwasser eines Hochdruck-Heißwasserstrahls 28, welches durch eine dieser Ausnehmungen 27 in den unteren Ringkanal 22 gelangen kann, wird durch die Hocken 15, die als Tropfkante wirken, nach unten geleitet und gelangt durch die restlichen Ausnehmungen 27 wieder nach außen. Etwas Wasserdampf kann über die Nut 25 in den oberen Ringkanal 23 aufsteigen und wird sich größtenteils dort niederschlagen und dann über die Nut 25 später nach unten tropfen. Die Engstelle 26 stellt eine weitere Barriere gegen eindringendes Wasser dar. Wie durch Versuche festgestellt wurde, gelangt nur wenig Wasser in die innere Kammer 24, selbst wenn der Druck des Heißwassers 80 bar und die Temperatur 75°C sowie der Abstand der Düse von der Lüftungskappe nur 3 cm betragen.

Wie aus Fig. 1 ersichtlich, weist der Behälterdeckel 5 einen zentralen Buckel auf, der über eine nach innen gerichtete Wölbung 29 in die äußeren Randbereiche des Deckels übergeht. Das Unterteil 11 der Lüftungskappe 4 besitzt einen Randflansch 30, der in den Wölbungsraum hineinreicht, ohne jedoch die Wölbung 29 direkt zu berühren. Es wird so ein abgeschirmter Ringraum 31 zwischen der Unterseite der Lüftungskappe 4 und dem Behälterdeckel 5 gebildet, der genügend Schutz für die Abdichtungsfläche 32 zwischen Lüftungskappe 4 und Behälterdeckel 5 bietet. Wie aus Fig. 6 ersichtlich, kann diese Abdichtungsfläche 32 mit einer Ringdichtung 33 versehen sein.

Wie in Fig. 4 dargestellt, kann eine Ringwand 34, die von der Dachwand des Oberteils 10 ausgeht, in die innere Kammer 24 hineinreichen, um weitere Engstellen und Labyrinthwege zu bilden. Dabei kann ein Zusammenwirken mit der Ringwandung 17 oder mit dem Gewindebolzen 3 bewerkstelligt werden.

In Fig. 5 sind die Winkelbereiche der Ringsegmente 20 markiert, an denen kein Luftaustritt und -eintritt und somit auch kein Sprühwasseraustritt und -eintritt möglich ist. Die Ringsegmentwände 20 nehmen einen Winkelumfang von 312° ein. Die Wahrscheinlichkeit, daß im praktischen Betrieb der Heißwasserstrahl überhaupt auf einen Luftaustritts- und -eintrittsschlitz trifft, ist somit von vornherein gering. In Fig. 5 sind ferner die axial ausgerichtete Nut 25 als schwarzer Punkt und die ungünstigste Richtung des Hochdruckheißwasserstrahles 28 markiert, für die der Weg von eindringendem Wasser bis zu der Nut 25 am kürzesten ist. Zur weiteren Erhöhung der Spritzwasserfestigkeit kann man deshalb die in Fig. 3 mit 27a, 27b bezeichneten Ausnehmungen verschließen bzw. von vornherein nicht vorsehen.

Fig. 6 stellt eine etwas vereinfachte Ausführungsform der Lüftungskappe dar. Diese enthält wiederum ein Oberteil 40, ein Unterteil 41 und eine Befestigungsmutter 42. Die Rippen 43 sind nur am Unterteil 41 vorgesehen. Die Lüftungsschlitze sind demnach nicht als flache Ausnehmungen im Bereich der (fehlenden) Rippen des Oberteils 40 ausgebildet, vielmehr ist der untere Ringkanal 23 über eine schlitzförmige Lücke 44 zwischen Oberteil 40 und Unterteil 41 geöffnet. Der Winkelumfang dieser schlitzförmigen Lücke 44 braucht nicht groß zu sein und kann beispielsweise 50° betragen. Die schlitzförmige Lücke 44 ist um 180° gegenüber der Nut 25 winkelversetzt angeordnet. Durch eine nicht dargestellte Rasteinrichtung wird sichergestellt, daß diese Winkelanordnung der schlitzförmigen Lücke 44 gegenüber der Nut 25 zwangsweise eingehalten wird.

## Patentansprüche

1. Lüftungskappe an einem Hydrauliköltank mit folgenden Merkmalen:

der Hydrauliköltank (1) weist einen inneren Lüftungskanal (2) und ein nach außen vorstehendes Bajonett- oder Schraubteil (3) auf, entlang welchem sich der innere Lüftungskanal (2) erstreckt;

ein Befestigungsteil (Bajonettgegenstück oder Mutter (12, 42)) greift am Bajonett oder Schraubteil (3) an und hält die Lüftungskappe (4) am Hydrauliköltank (1);

die Lüftungskappe (4) umfaßt eine innere Kammer (24), die mit dem inneren Lüftungskanal (2) verbunden ist und von der wenigstens ein äußerer Lüftungskanal (22, 23, 25, 26, 27) ins Freie führt;

gekennzeichnet durch folgende Merkmale:
die Lüftungskappe (4) enthält
ein Unterteil (11, 41), das eine Ringwandung (17) mit Rastausbildung (18) aufweist, und
ein mit Rastausbildung (19) versehenes
Oberteil (10, 40), das auf das Unterteil (11, 41)
gesteckt ist;

der äußere Lüftungskanal (22, 23, 25, 26, 27)
erstreckt sich

teils durch freigelassene, ringförmige
Kanalbereiche (22, 23) zwischen dem Ober- und
Unterteil,

teils durch axiale und radiale Bereiche (25, 26)
zwischen Ober- und Unterteil, so daß zwischen
der inneren Kammer (24) und dem Freien
wenigstens ein Labyrinthkanal gebildet wird,
dessen axiale und radiale Kanalbereiche (25, 26)
als Engstellen ausgebildet und in
Umfangsrichtung der ringförmigen
Kanalbereiche (22, 23) zueinander versetzt
angeordnet sind.

2. Lüftungskappe nach Anspruch 1,
dadurch gekennzeichnet, daß die
freigelassenen, ringförmigen Kanalbereiche
einen oberen Ringkanal (23) und einen unteren
Ringkanal (22) umfassen, die über eine
achsparallele Nut (25) als axialer Kanalbereich
und als erste Engstelle miteinander verbunden
sind.

3. Lüftungskappe nach Anspruch 2,
dadurch gekennzeichnet, daß die innere
Kammer (24) zwischen der Ringwandung (17) des
Unterteils (11, 41) und einer Dachwand des
Oberteils (10, 40) angeordnet ist und über eine
radiale Nut (26 ) als radialer Kanalbereich und
zweite Engstelle mit dem oberen Ringkanal (23)
verbunden ist.

4. Lüftungskappe nach einem der Ansprüche 1-
3,
dadurch gekennzeichnet, daß das Oberteil (10)
am Außenumfang axial ausgerichtete Rippen (13,
13a) aufweist, von denen wenigstens einige (13)
an ihrem unteren Ende als Nocken (15) zum
Eingriff in entsprechende Einbuchtungen (16) des
Unterteils (11) ausgebildet sind.

5. Lüftungskappe nach Anspruch 4,
dadurch gekennzeichnet, daß wenigstens
einige der Rippen (13) im Bereich der Nocken (15)
flache Ausnehmungen (27) aufweisen, die als
Lüftungsschlitze zwischen Ober- und Unterteil
(10, 11) in den unteren Ringkanal (22) führen.

6. Lüftungskappe nach einem der Ansprüche 1-
5,
dadurch gekennzeichnet, daß das Oberteil (10,
40) ein oder mehrere Ringsegmentwände (20)
besitzt, deren untere Seite abdichtend mit einer
ringförmigen Auflagefläche (21 ) des Unterteils
(11, 41) in Berührung steht.

7. Lüftungskappe nach Anspruch 6,
dadurch gekennzeichnet, daß die
Abdichtbereiche der Ringsegmentwand bzw.
-wände einen Winkelumfang von etwa 310°
ergeben.

8. Lüftungskappe nach einem der Ansprüche 1-
7,
dadurch gekennzeichnet, daß das Unterteil (11,
41) einen Randflansch (30) besitzt, der zum
Behälterdeckel (5) hin einen abgeschirmten Ringraum (31) bildet.

9. Lüftungskappe nach einem der Ansprüche 1-
8,
dadurch gekennzeichnet, daß das
Befestigungsteil (12, 42) an der inneren Kammer
(24) angrenzt und an einer von dieser gebildeten
Schulter anliegt.

## Claims

1. Ventilation cap on a hydraulic oil tank,
having the following features:
the hydraulic oil tank (1) has an inner venting
passage (2) and an outwardly projecting bayonet
portion (3) or screw portion (3), along which the
inner venting passage (2) extends;
a fastening component (bayonet countercomponent or nut (12, 42)) engages onto the
bayonet or screw portion (3) and retains the
ventilation cap (4) on the hydraulic oil tank (1);
the ventilation cap (4) includes an inner
chamber (24) which is connected to the inner
venting passage (2) and from which at least one
outer venting passage (22, 23, 25, 26, 27) leads to
the open air, characterized by the following
features:
the ventilation cap (4) comprises a lower
portion (11, 41) having an annular wall (17)
formed with a snap-locking means (18),
and an upper portion (10, 40) which is provided
with a snap-locking means (19) and is fitted onto
the lower portion (11, 41);
the outer venting passage (22, 23, 25, 26, 27)
extends, in part, through annular passage regions
(22, 23) which are left open between the upper
portion and the lower portion,
in part through axial and radial regions (25, 26)
between the upper portion and the lower portion,
so that at least one labyrinth passage is formed
between the inner chamber (24) and the open air,
the axial and radial regions (25, 26) of this
labyrinth passage being shaped as constrictions
and being circumferentially displaced relative to
each other, around the annular passage regions
(22, 23).

2. Ventilation cap according to Claim 1,
characterized in that the annular passage regions
that are left open comprise an upper annular
passage (23) and a lower annular passage (22),
these passages being interconnected via a
groove (25) which is parallel to the axis and
serves both as an axial passage region and as a
first constriction.

3. Ventilation cap according to Claim 2,
characterized in that the inner chamber (24) is
located between the annular wall (17) of the
lower portion (11, 41) and a top wall of the upper
portion (10, 40), and is connected to the upper
annular passage (23) via a radial groove (26)
which serves both as a radial passage region and
as a second constriction.

4. Ventilation cap according to any one of
Claims 1 to 3, characterized in that the upper portion (10) has axially-extending ribs (13, 13a) on the external periphery, the lower ends of at least some of these ribs (13) being shaped as cams (15) in order to engage into corresponding recesses (16) in the lower portion (11).

5. Ventilation cap according to Claim 4, characterized in that at least some of the ribs (13) have shallow recesses (27) in the region of the cams (15), these recesses (27) leading into the lower annular passage (22) and serving as venting slots between the upper portion (10) and the lower portion (11).

6. Ventilation cap according to any one of Claims 1 to 5, characterized in that the upper portion (10, 40) possesses one or more annular segment walls (20), their undersurfaces being in sealing contact with an annular seating surface (21) belonging to the lower portion (11, 41).

7. Ventilation cap according to Claim 6, characterized in that the sealing arcs defined by the annular segment wall, or walls, have a total angular extent of approximately 310°.

8. Ventilation cap according to any one of Claims 1 to 7, characterized in that the lower portion (11, 41) possesses an edge flange (30) which forms a screened annular space (31) in the direction towards the tank lid (5).

9. Ventilation cap according to any one of Claims 1 to 8, characterized in that the fastening component (12, 42) adjoins the inner chamber (24) and bears against a shoulder formed by this chamber.

**Revendications**

1. Capuchon de ventilation sur un réservoir d'huile hydraulique présentant les caractéristiques suivantes:

le réservoir d'huile hydraulique (1) présente un canal de ventilation intérieur (2) et une pièce, à raccord à baïonnette ou à raccord fileté, qui dépasse vers l'extérieur et le long de laquelle s'étend le canal de ventilation intérieur (2) ;

une pièce de fixation (à contre-raccord à baïonnette ou écrou (12, 42)) est en prise avec la pièce à raccord à baïonnette ou à raccord fileté (3) et maintient le capuchon de ventilation (4) sur le réservoir d'huile hydraulique (1) ;

le capuchon de ventilation (4) renferme une chambre intérieure (24) qui est reliée avec le canal de ventilation intérieur (2) et de laquelle au moins un canal de ventilation extérieur (22, 23, 25, 26, 27) débouche à l'air libre ;

caractérisé par le fait que:

le capuchon de ventilation (4) comporte
une partie inférieure (11, 41) qui présente une paroi annulaire (17) à conformation de crantage (18) et
une partie supérieure (10, 40) qui présente une conformation de crantage (19) et qui est enfichée sur la partie inférieure (11, 41);

le canal de ventilation extérieur (22, 23, 25, 26, 27) s'étend, en partie à travers des zones annulaires, formant canal (22, 23), laissées libres entre la partie supérieure et la partie inférieure, en partie à travers des zones axiales et radiales (25, 26) situées entre la partie supérieure et la partie inférieure, de sorte qu'entre la chambre intérieure (24) et l'air libre

se forme au moins un canal labyrinthe dont les zones axiales et radiales (25, 26) sont conçues sous forme de passages étroits et sont disposées décalées l'une par rapport à l'autre dans la direction circonférentielle des zones annulaires (22, 23) formant canal.

2. Capuchon de ventilation selon la revendication 1, caractérisé en ce que les zones annulaires laissées libres, formant canal, comprennent un canal annulaire supérieur (23) et un canal annulaire inférieur (22) qui sont réunis l'un à l'autre par l'intermédiaire d'une rainure (25) parallèle à l'axe, formant zone axiale de canal et formant premier passage étroit.

3. Capuchon de ventilation selon la revendication 2,
caractérisé en ce que la chambre intérieure (24) est disposée entre la paroi annulaire (17) de la partie inférieure (11, 41) et une paroi formant le toit de la partie supérieure (10, 40); et en ce qu'elle est réunie avec le canal annulaire supérieur (23) par l'intermédiaire d'une rainure radiale (26) formant zone radiale de canal et formant second passage étroit.

4. Capuchon de ventilation selon l'une des revendications 1 à 3,
caractérisé en ce que la partie supérieure (10) présente, sur sa périphérie extérieure, des nervures (13, 13a) dirigées axialement dont au moins quelques-unes (13) sont conçues, à leur extrémité inférieure, sous forme de doigts (15) qui viennent en prise dans des créneaux correspondants (16) de la partie inférieure (11).

5. Capuchon de ventilation selon la revendication 4, caractérisé en ce qu'au moins quelques-unes des nervures (13) présentent, au voisinage des doigts (15), des évidements plats (27) qui conduisent dans le canal annulaire inférieur (22), en faisant fonction de fentes de ventilation entre la partie supérieure et la partie inférieure (10, 11).

6. Capuchon de ventilation selon l'une des revendications 1 à 5,
caractérisé en ce que la partie supérieure (10, 40) présente une ou plusieurs parois sous forme de segments annulaires, dont la face inférieure vient en contact, avec étanchéité, avec une surface d'appui annulaire (21) de la partie inférieure (11, 41).

7. Capuchon de ventilation selon la revendication 6,
caractérisé en ce que les zones d'étanchéité de la paroi ou des parois qui se présentent sous forme de segments annulaires, représentent un secteur circonférentiel d'environ 310°.

8. Capuchon de ventilation selon l'une des revendications 1 à 7,
caractérisé en ce que la partie inférieure (11, 41) présente un rebord (30) qui forme, en direction du couvercle (5) du réservoir, un espace annulaire protégé (31).

9. Capuchon de ventilation selon l'une des revendications 1 à 8, caractérisé en ce que la pièce de fixation (12, 42) se limite à la chambre intérieure (24) et s'appuie contre un épaulement formé par celle-ci.

Fig 1

Fig 2

0 153 428

Fig 3

Fig 4

3

0 153 428

Fig 5

Fig 6